# FASCICULE DE BREVET EUROPEEN

(11) **EP 1 405 758 B1**
(45) Date de publication et mention de la délivrance du brevet: **20.09.2006**
(21) Numéro de dépôt: 03103658.5
(22) Date de dépôt: 02.10.2003
(51) Int. Cl.: B60N 3/00

(54) **Agencement perfectionné d'une table escamotable dans l'habitacle d'un véhicule automobile**
Verbesserte Tischplatteanordnung im Innenraum eines Kraftfahrzeuges
Improved folding table arrangement in an automotive vehicle passenger compartment

(30) Priorité: 03.10.2002 FR 0212254
(43) Date de publication de la demande: 07.04.2004
(73) Titulaire: Renault s.a.s., 92100 Boulogne Billancourt (FR); ADAM OPEL AG, 65423 Rüsselsheim (DE)
(72) Inventeur: Michelin, M. Didier, 78950, Gambais (FR)
(74) Mandataire: Kohn, Philippe

(56) Documents cités:
- GB-A- 620 861
- US-A- 2 947 348
- US-A- 3 632 161
- US-A- 4 852 940
- US-A- 4 944 552
- US-B1- 6 347 590

## Description

La présente invention concerne l'agencement d'une table escamotable dans l'habitacle d'un véhicule automobile.

L'invention concerne plus particulièrement l'agencement d'une table escamotable dans l'habitacle d'un véhicule automobile, comportant une console qui est montée sur le plancher du véhicule et qui délimite un compartiment pour le rangement de la table en position escamotée, du type dans lequel la table comporte au moins un panneau qui est articulé sur la console, par un bord longitudinal dit de pivotement, et autour d'un axe transversal agencé au voisinage d'une extrémité longitudinale du bord de pivotement, qui s'étend globalement dans un plan longitudinal horizontal, en position escamotée, et qui s'étend globalement dans un plan horizontal, en position horizontale d'utilisation, du type dans lequel le panneau est monté pivotant autour de l'axe longitudinal agencé au voisinage de son bord longitudinal de pivotement, de manière que le panneau parvienne à sa position d'utilisation, à partir de sa position escamotée, en pivotant, dans un premier temps, vers le haut et vers l'arrière, autour de l'axe transversal et, dans un second temps, vers un côté et vers le bas, autour de l'axe longitudinal, et du type dans lequel la console comporte, globalement dans sa partie supérieure, une ouverture pour le passage du panneau lorsqu'il pivote autour de son axe transversal, et au moins un capot pivotant susceptible de fermer l'ouverture

Les véhicules ayant un habitacle très modulable du type « monospaces » et les petits véhicules utilitaires pour le transport de passagers, sont de plus en plus employés pour une utilisation « loisirs », en week-end ou en vacances. Ce type d'utilisation a fait apparaître le besoin de prévoir une table à l'intérieur des véhicules. Cette table doit être escamotable, pour ne pas diminuer l'espace disponible à l'intérieur de l'habitacle du véhicule, lorsque la table n'est pas utilisée.

On connaît déjà des véhicules particuliers dans lesquels les dossiers des sièges sont munis de tablettes relevables. De telles tablettes sont toujours de très petites dimensions, de sorte qu'elles ne permettent pas de poser plus de deux gobelets, ou canettes, et qu'elles forment des écritoires symboliques.

Dans certains véhicules de loisirs, réalisés sur la base de véhicules utilitaires, il est prévu une table escamotable qui se déploie, soit depuis un garnissage intérieur latéral de l'habitacle, soit depuis une console agencée au centre de l'habitacle.

Lorsque la table se déploie depuis le garnissage intérieur latéral, elle ne peut être utilisée que dans la moitié de l'habitacle correspondante, de sorte que les passagers situés dans l'autre moitié de l'habitacle ne sont pas en mesure d'utiliser la table.

Lorsque la table se déploie depuis la console centrale, elle se déplie généralement de chaque côté de la console, de sorte qu'elle peut s'étendre globalement sur toute la largeur de l'habitacle. Cependant, lorsque la table est escamotée dans la console, la console encombre inutilement la partie centrale de l'habitacle.

Les documents US-A-6.347.590 et GB-A-620.861, qui décrit un agencement selon le préambule de la revendication 1, décrivent et représentent une table qui se déploie depuis une console centrale. A cette fin, la table est montée pivotante sur la console par l'intermédiaire d'une charnière. Lorsque la table est déployée dans sa position d'utilisation, son pivotement est bloquée par un mécanisme de verrouillage qui est compris dans la charnière. Cependant, ce mécanisme de verrouillage est complexe à fabriquer et fragile.

Le document US-A-2.947.348 décrit et représente une table escamotable dans une console. En position d'utilisation, la table est appuyée par une première extrémité sur la console. Cependant, la table en position déployée doit aussi être appuyée par sa deuxième extrémité opposée sur un deuxième support. En position escamotée de la table, le support auxiliaire encombre inutilement l'habitacle du véhicule.

L'invention vise à remédier à ces inconvénients en proposant une solution simple et économique.

Dans ce but, l'invention propose un agencement du type décrit précédemment, caractérisé en ce que la console comporte un élément de capot qui est monté pivotant, par rapport à la console, autour d'un axe sensiblement transversal, entre une position de fermeture et une position d'ouverture de la console, et en ce que, en position d'ouverture, l'élément de capot forme un élément de soutien du panneau dans sa position d'utilisation.

Selon d'autres caractéristiques de l'invention :
- le panneau est monté pivotant autour de son axe transversal sur une plaque centrale, et la plaque centrale est montée pivotante autour de l'axe transversal ;
- en position escamotée, la plaque centrale ferme la partie supérieure de l'ouverture de la console ;
- la table comporte deux panneaux qui sont montés pivotant autour du même axe transversal et qui sont articulés l'un par rapport à l'autre.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté avec arrachement qui représente schématiquement l'agencement d'une table escamotable dans un véhicule conformément à un premier mode de réalisation de l'invention ;
- la figure 2 est une vue en perspective de trois-quarts arrière qui représente schématiquement une console de rangement de la table de la figure 1 en position escamotée et fermée ;
- la figure 3 est une vue similaire à celle de la figure 2 qui représente schématiquement la table de la figure 1 partiellement sortie de la console et les capots de la console en positions ouvertes ;
- la figure 4 est une vue similaire à celle de la figure 2 qui représente la table de la figure 1 avec un panneau en position d'utilisation, le capot avant de la console étant fermé ;
- la figure 5 est une vue arrière qui représente schématiquement la table de la figure 1 en position d'utilisation ;
- la figure 6 est une vue de côté qui illustre schématiquement les différentes positions occupées par la table de la figure 1 lors de son pivotement entre sa position escamotée et sa position d'utilisation ;
- la figure 7 est une vue similaire à celle de la figure 6 qui représente la table de la figure 1 dans la même position qu'à la figure 3 ;
- la figure 8 est une vue similaire à celle de la figure 6 qui représente la table en position d'utilisation, le capot avant de la console étant fermé ;
- la figure 9 est une similaire à celle de la figure 2 qui représente schématiquement un agencement selon un deuxième mode de réalisation de l'invention en position escamotée ;
- la figure 10 est une vue similaire à celle de la figure 4 qui représente la table de la figure 9 en position d'utilisation.

Dans la suite de la description, des éléments identiques ou similaires seront désignés par les mêmes références.

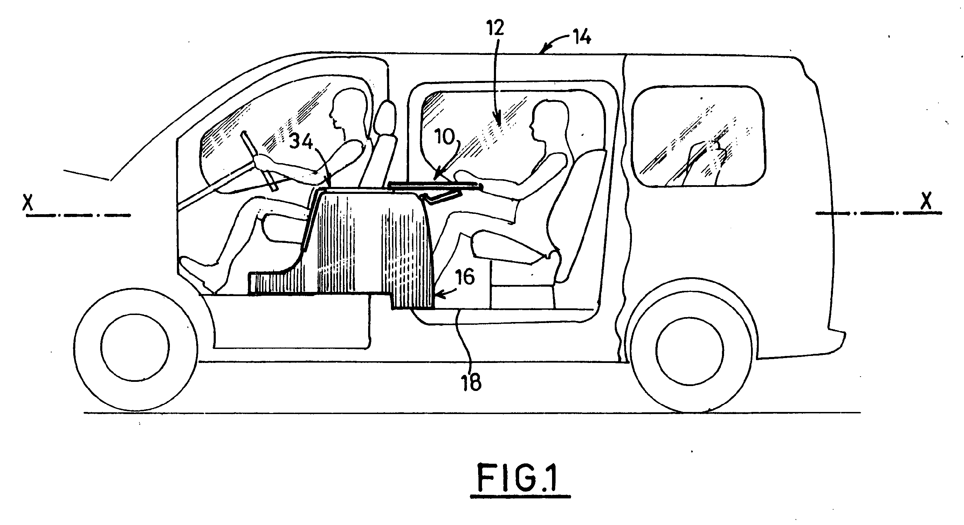

Les figures 1 à 8 représentent l'agencement d'une table escamotable 10 dans l'habitacle 12 d'un véhicule 14, selon un premier mode de réalisation de l'invention.

Pour la suite de la description, on définit, à titre non limitatif, une direction longitudinale horizontale X-X, qui correspond à l'axe longitudinal du véhicule. A titre non limitatif, on utilisera une orientation de l'arrière vers l'avant, suivant la direction longitudinale X-X, qui correspond à une orientation de la droite vers la gauche, en considérant la figure 1.

A titre non limitatif, on utilisera le terme « transversal » pour qualifier une direction sensiblement horizontale et orthogonale à la direction longitudinale X-X, et pour qualifier un élément contenu dans un plan globalement orthogonal à la direction longitudinale X-X.

L'agencement comporte une console 16, qui est montée sur le plancher 18 du véhicule 14, et qui délimite un logement, ou compartiment, pour le rangement de la table 10 en position escamotée.

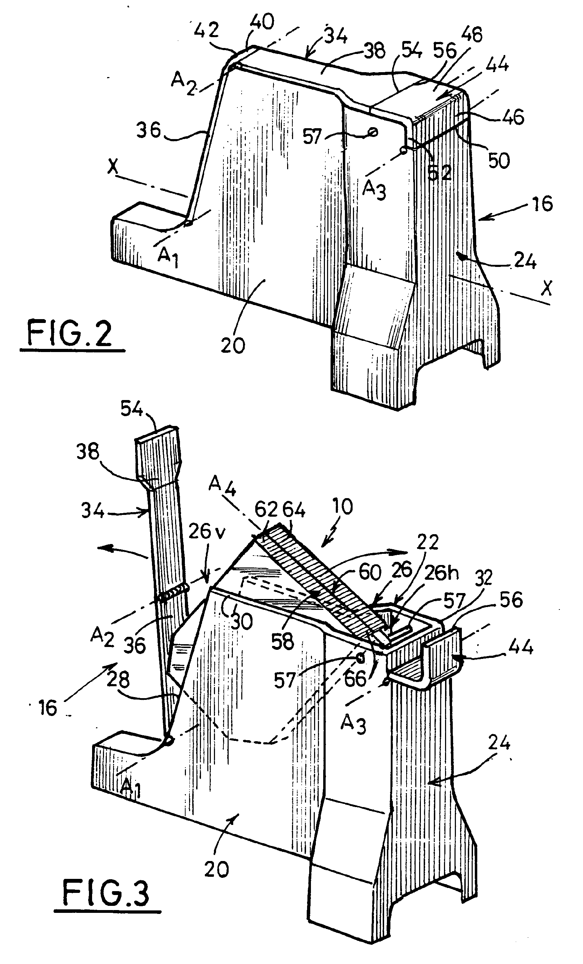

Comme on peut le voir notamment sur les figures 2 et 3, la console 16 forme un caisson qui est délimité, latéralement, par deux parois verticales longitudinales 20, 22, et à l'arrière par une paroi transversale 24.

La console 16 comporte une ouverture 26 pour permettre de sortir la table 10 de sa position escamotée à l'intérieur de la console 16.

L'ouverture 26 comporte ici une portion horizontale 26h, qui est délimitée par les bords longitudinaux supérieurs 30 des parois latérales 20, 22, et par le bord transversal supérieur 32 de la paroi transversale arrière 24, et elle comporte une portion globalement verticale 26v, qui est délimitée par les bords verticaux avant 28 des parois latérales 20, 22.

La console 16 comporte un capot avant 34, qui est réalisé ici en deux parties 36, 38 articulées l'une par rapport à l'autre, et qui est monté à pivotement, autour d'un axe transversal inférieur A1, à l'extrémité inférieure de la portion avant de l'ouverture 26.

La partie inférieure 36 du capot avant 34 est conçue pour fermer la portion verticale 26v de l'ouverture 26, et la partie supérieure 38 du capot avant 34 est conçue pour fermer une partie avant de la portion horizontale 26h de l'ouverture 26.

La partie supérieure 38 est liée à pivotement, autour d'un axe transversal supérieur A2, par son bord transversal avant 40, au bord transversal supérieur 42 de la partie inférieure 36.

La console 16 comporte aussi un capot arrière 44 qui est conçu pour fermer une partie arrière de la portion horizontale 26h de l'ouverture 26.

Le capot arrière 44 a ici un profil en L, dans un plan longitudinal vertical, de sorte que, dans sa position de fermeture, qui est représentée sur la figure 2, il comporte, à l'arrière, un pan transversal 46 et, à l'avant, un pan horizontal 48.

Le capot arrière 44 est monté à pivotement, autour d'un axe transversal A3, par son bord transversal d'extrémité arrière 50, sur la paroi transversale arrière 24 de la console 16.

Le capot arrière 44 est donc susceptible de pivoter autour de son axe transversal A3, entre une position de fermeture, représentée notamment sur la figure 2, et une position d'ouverture, représentée notamment sur la figure 3.

La paroi transversale arrière 24 comporte ici un décrochement 52, dans sa partie supérieure, pour recevoir de manière complémentaire le pan transversal 46 du capot arrière 44.

Dans la position de fermeture des deux capots 34, 44, qui est représentée sur la figure 2, le bord transversal d'extrémité arrière 54 de la partie supérieure 38 du capot avant 34 est adjacent au bord transversal d'extrémité avant 56, en vis-à-vis, du capot arrière 44.

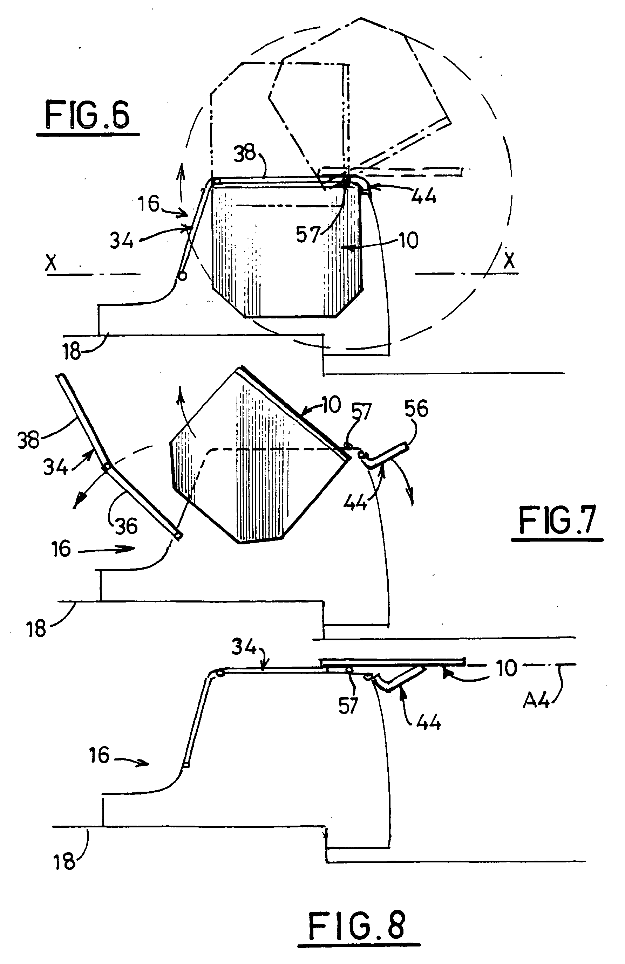

La table 10 est montée à pivotement autour d'un arbre transversal 57, à l'intérieur de la console 16, entre la position escamotée, qui est illustrée notamment par la figure 6 (en traits forts), et une position horizontale d'utilisation, qui est illustrée notamment par les figures 1, 5, et 8.

L'arbre transversal de pivotement 57 de la table 10 est agencé ici au voisinage du bord transversal supérieur 32 de la paroi transversale arrière 24 de la console 16, c'est à dire à l'arrière et en haut de la console 16.

La table 10 comporte deux panneaux latéraux 58, 60, de forme globalement rectangulaire, qui sont rangés parallèlement, chacun dans un plan longitudinal et vertical, à l'intérieur de la console 16, en position escamotée.

Les panneaux latéraux 58, 60 sont liés à pivotement autour d'un axe longitudinal A4, par leurs bords longitudinaux supérieurs 62, 64, en considérant la position escamotée. On appellera ces bords longitudinaux 62, 64, bords de pivotement.

La table 10 comporte une charnière 66, assurant le pivotement des panneaux latéraux 58, 60 autour de l'axe longitudinal A4, qui est agencée au voisinage de l'arête arrière supérieure des panneaux 58, 60, et qui est montée à pivotement autour de l'arbre 57, de manière à permettre le pivotement des panneaux 58, 60, autour de l'arbre transversal 57, depuis la position escamotée, vers le haut et vers l'arrière, jusqu'à la position d'utilisation.

On note que, dans la position escamotée, les bords longitudinaux de pivotement 62, 64 des panneaux latéraux 58, 60 s'étendent globalement longitudinalement vers l'avant, depuis l'arbre transversal 57, et dans la position d'utilisation, les bords longitudinaux de pivotement 62, 64 s'étendent globalement longitudinalement vers l'arrière, depuis l'arbre transversal 57.

Avantageusement, selon le mode de réalisation représenté ici, le capot arrière 44 est retenu verticalement dans sa position d'ouverture par des moyens de butée appropriés (non représentés), de manière que son bord transversal d'extrémité avant 56 puisse former une surface d'appui sensiblement horizontale pour la table 10 en position d'utilisation.

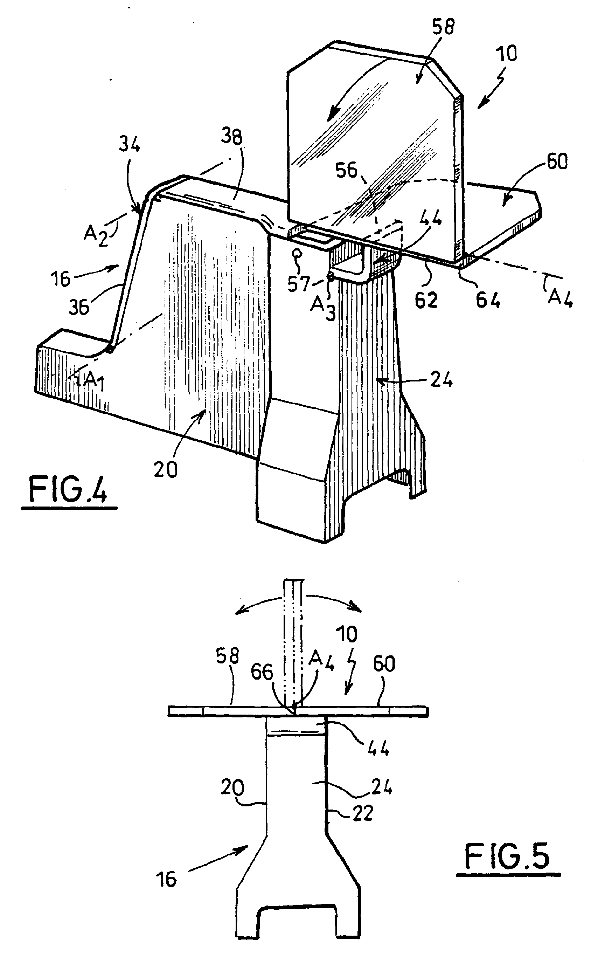

On décrit maintenant le fonctionnement de l'agencement selon le premier mode de réalisation de l'invention, en référence notamment aux figures 4 à 8.

A partir de la position escamotée, on ouvre le capot avant 34 en le faisant pivoter vers l'avant, c'est à dire dans le sens anti-horaire en considérant la figure 6, autour de son axe transversal inférieur A1.

Avantageusement, on fait aussi pivoter la partie supérieure 38 du capot avant 34 autour de l'axe transversal supérieur A2, de manière à dégager au maximum l'espace dans la zone de pivotement de la table 10 autour de l'arbre transversal 57.

On fait aussi pivoter le capot arrière 44 vers l'arrière, c'est à dire dans le sens horaire en considérant la figure 6, autour de son axe transversal A3, jusqu'à ce que le capot arrière 44 occupe sa position d'ouverture déterminée par les moyens de butée.

L'ouverture 26 de la console 16 étant dégagée, on sort la table 10 en la faisant pivoter autour de l'arbre transversal 57, dans le sens horaire en considérant la figure 6. La figure 7 représente la table 10 dans une position intermédiaire, partiellement sortie de la console 16.

On fait pivoter la table 10 jusqu'à la position d'utilisation, c'est à dire jusqu'à ce que les bords longitudinaux de pivotement 62, 64 des panneaux latéraux 58, 60 s'étendent longitudinalement vers l'arrière, depuis l'arbre 57, de manière qu'ils soient en appui vers le bas sur le bord transversal d'extrémité 56 du capot arrière 44.

A ce stade du déploiement de la table 10, les panneaux latéraux 58, 60 s'étendent sensiblement verticalement vers le haut, par rapport à leurs bords longitudinaux de pivotement 62, 64, comme on l'a représenté en traits fantômes sur la figure 5.

Il reste alors à faire pivoter chaque panneau latéral 58, 60, autour de l'axe longitudinal A4, vers les côtés, de manière qu'il décrive un quart de tour et qu'il atteigne sa position horizontale d'utilisation, comme on l'a représenté en traits forts sur les figures 5 et 8.

De préférence, lorsque la table 10 occupe sa position finale d'utilisation, le capot avant 34 est refermé sur la console 16, ce qui permet notamment une utilisation de la paroi supérieure 38 de la console 16 comme accoudoir ou comme surface de rangement.

Pour replacer la table 10 dans sa position escamotée, il suffit d'effectuer les étapes décrites précédemment dans un ordre inversé.

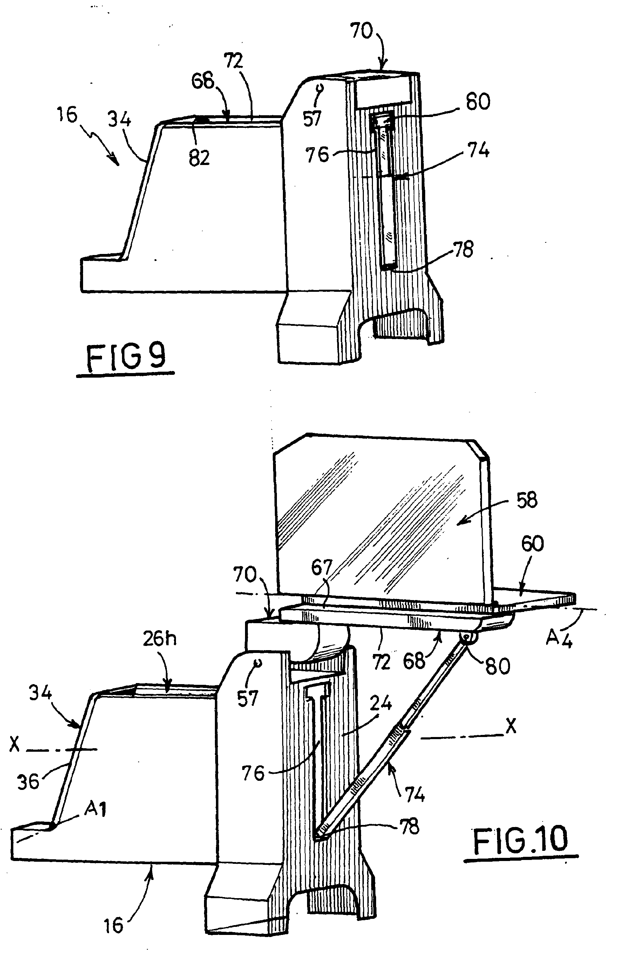

Les figures 9 et 10 illustrent un second mode de réalisation d'un agencement selon l'invention.

Le principe du déploiement de la table 10 vers le haut et vers l'arrière, depuis la position escamotée jusqu'à la position horizontale d'utilisation, est globalement similaire à celui du premier mode de réalisation.

Les panneaux latéraux 58, 60 de la table 10 sont ici montés à pivotement, suivant l'axe longitudinal A4, sur la face intérieure 67 d'une plaque centrale 68 qui, dans la position escamotée, ferme la portion horizontale 26h de l'ouverture 26 de la console 16.

On note que le capot avant 34 comporte une seule partie 36 correspondant globalement à la partie inférieure du capot avant 34 du premier mode de réalisation, la plaque centrale 68 remplaçant la partie supérieure 38. De plus, la console 16 est ici dépourvue de capot arrière 44.

La plaque centrale 68 est ici solidaire d'un bloc 70, par une portion d'extrémité de sa face extérieure 72. Le bloc 70 est monté à pivotement autour de l'arbre 57 de la console 16, et il ferme la partie arrière de la portion horizontale 26h de l'ouverture 26, en position escamotée.

En position escamotée, les panneaux latéraux 58, 60 s'étendent verticalement vers le bas, depuis la face intérieure 67 de la plaque centrale 68.

La console 16 comporte aussi un bras télescopique de soutien 74 escamotable, qui est reçu dans une rainure de rangement verticale 76, de forme complémentaire du bras 74, réalisée dans la face transversale arrière 24 de la console 16.

Le bras 74 est monté à pivotement autour d'un axe transversal, par son extrémité inférieure 78.

A son extrémité libre supérieure, le bras comporte un organe d'emboîtement 80, qui est prévu pour s'emboîter dans un logement complémentaire 82 de la face extérieure 72 de la plaque centrale 68, lorsque celle-ci occupe sa position d'utilisation.

Le déploiement de la table 10 selon le deuxième mode de réalisation s'effectue de la manière suivante.

Après avoir ouvert le capot avant 34, on fait basculer la plaque centrale 68 d'un demi tour vers l'arrière, autour de l'arbre transversal 57, dans le sens horaire en considérant la figure 9.

Lorsque la plaque centrale 68 occupe sa position horizontale d'utilisation, en porte à faux vers l'arrière, on fait pivoter le bras 74 autour de son axe, dans le sens horaire, et on emboîte l'extrémité 80 dans le logement 82 de la plaque centrale 68, de manière que le bras 74 forme un arc-boutant pour soutenir verticalement la plaque centrale 68 dans sa position d'utilisation.

Les panneaux latéraux 58, 60 de la table 10 sont ensuite déployés en les faisant pivoter autour de l'axe longitudinal A4, de la même manière que dans le premier mode de réalisation.

Un avantage important de l'agencement selon l'invention est qu'il permet un déploiement de la table 10 vers l'arrière, par rapport à la console 16, de sorte que la console 16 peut être agencée entre deux sièges, dans l'habitacle 12 du véhicule 14. Ainsi, contrairement à certains dispositifs connus, la console 16 de rangement de la table 10 n'encombre pas une allée desservant une rangée de sièges.

On note que la table 10 se déploie en porte-à-faux complet vers l'arrière, par rapport à la console 16, ce qui n'entraîne aucune gêne pour les jambes des usagers, et ce qui permet de refermer l'ouverture 26, en position d'utilisation, comme dans le premier mode de réalisation, pour permettre l'utilisation de la partie supérieure 38 de la console 16 comme accoudoir, ou comme surface de rangement.

L'utilisation du capot arrière 44 comme élément de soutien de la table 10 en position d'utilisation permet de minimiser l'encombrement des moyens de soutien de la table 10, notamment par rapport au deuxième mode de réalisation.

Selon une variante de réalisation (non représentée) de l'invention, chaque panneau latéral 58, 60 de la table 10 peut comporter une portion de plaque dépliable, à la manière d'un portefeuille, en position d'utilisation, en vue d'augmenter l'aire de la table 10 dans un plan horizontal.

## Revendications

1. Agencement d'une table escamotable (10) dans l'habitacle (12) d'un véhicule automobile (14), comportant une console (16) qui est montée sur le plancher (18) du véhicule (14) et qui délimite un compartiment pour le rangement de la table (10) en position escamotée, du type dans lequel la table (10) comporte au moins un panneau (58, 60) qui est articulé sur la console (16), par un bord longitudinal dit de pivotement (62, 64) autour d'un axe longitudinal (A4), et autour d'un axe transversal (57) agencé au voisinage d'une extrémité longitudinale du bord de pivotement (62, 64), qui s'étend globalement dans un plan longitudinal horizontal en position escamotée, et qui s'étend globalement dans un plan horizontal, en position horizontale d'utilisation, du type dans lequel le panneau (58, 60) est monté pivotant autour de l'axe longitudinal (A4) agencé au voisinage de son bord longitudinal de pivotement (62, 64), de manière que le panneau (58, 60) parvienne à sa position d'utilisation, à partir de sa position escamotée, en pivotant, dans un premier temps, vers le haut et vers l'arrière, autour de l'axe transversal (57) et, dans un second temps, vers un côté et vers le bas, autour de l'axe longitudinal (A4), et du type dans lequel la console (16) comporte, globalement dans sa partie supérieure, une ouverture (26) pour le passage du panneau (58, 60) lorsqu'il pivote autour de son axe transversal (57), et au moins un capot (34, 44) pivotant susceptible de fermer l'ouverture (26),
**caractérisé en ce que** la console (16) comporte un élément de capot (44) qui est monté pivotant, par rapport à la console (16), autour d'un axe sensiblement transversal (A3), entre une position de fermeture et une position d'ouverture de la console (16), et **en ce que**, en position d'ouverture, l'élément de capot (44) forme un élément de soutien du panneau (58, 60) dans sa position d'utilisation.

2. Agencement selon la revendication précédente, **caractérisé en ce que** le panneau (58, 60) est monté pivotant autour de son axe transversal (A4) sur une plaque centrale (68), et **en ce que** la plaque centrale (68) est montée pivotante autour de l'axe transversal (57).

3. Agencement selon la revendication précédente, **caractérisé en ce que**, en position escamotée, la plaque centrale (68) ferme la partie supérieure (26h) de l'ouverture (26) de la console (16).

4. Agencement selon l'une quelconque des revendications précédentes, **caractérisé en ce que** la table (10) comporte deux panneaux (58, 60) qui sont montés pivotant autour du même axe transversal (57) et qui sont articulés l'un par rapport à l'autre.

## Claims

1. Arrangement of a folding table (10) in the passenger compartment (12) of a motor vehicle (14), comprising a console (16) which is mounted on the floor (18) of the vehicle (14) and which delimits a compartment for arranging the table (10) in the folded position, of the type in which the table (1) comprises at least one panel (58, 60) which is articulated to the console (16), along a so-called pivoting longitudinal edge (62, 64), about a longitudinal axis (A4), and about a transverse axis (57) arranged near one longitudinal end of the pivoting edge (62, 64) which extends globally in a horizontal longitudinal plane, in the folded position, and which extends globally in a horizontal plane, in the horizontal use position, of the type in which the panel (58, 60) is mounted so as to pivot about the longitudinal axis (A4) arranged near its longitudinal pivoting edge (62, 64), so that the panel (58, 60) reaches its use position, from its folded position, by pivoting, initially upwards and backwards, about the transverse axis (57) and, secondly, towards one side and downwards, about the longitudinal axis (A4), and of the type in which the console (16) comprises, globally in its upper part, an opening (26) for the panel (58, 60) to pass through when it pivots about its transverse axis (57), and at least one pivoting cover (34, 44) capable of closing the opening (26), **characterised in that** the console (16) comprises a cover element (44) which is mounted so as to pivot, in relation to the console (16), about a substantially transverse axis (A3), between a closed position and an open position of the console (16), and **in that**, in the open position, the cover element (44) forms an element for supporting the panel (58, 60) in its use position.

2. Arrangement according to the preceding claim, **characterised in that** the panel (58, 60) is mounted so as to pivot about its transverse axis (A4) on a central plate (68), and **in that** the central plate (68) is mounted so as to pivot about the transverse axis (57).

3. Arrangement according to the preceding claim, **characterised in that**, in the folded position, the central plate (68) closes the upper part (26h) of the opening (26) of the console (16).

4. Arrangement according to any of the preceding claims, **characterised in that** the table (10) comprises two panels (58, 60) which are mounted so as to pivot about the same transverse axis (57) and which are articulated in relation to each other.

## Patentansprüche

1. Anordnung eines einklappbaren Tischs (10) im Innenraum (12) eines Kraftfahrzeugs (14), welche eine Konsole (16) aufweist, die auf dem Boden (18) eines Fahrzeugs (14) befestigt ist und die ein Fach für die Unterbringung des Tischs (10) in eingeklappter Position abgrenzt, bei welcher der Tisch (10) wenigstens eine Platte (58, 60) aufweist, die gelenkig an der Konsole (16) durch einen Längs-Schwenkrand (62, 64) um eine Längsachse (A4) und um eine Querachse (57) angebracht ist, die in der Nähe eines Längsendes des Schwenkrands (62, 64) angeordnet ist, die sich in eingeklappter Position im Wesentlichen in einer waagerechten Längsebene erstreckt, und die sich in waagerechter Verwendungsposition in einer waagerechten Ebene erstreckt, wobei die Platte (58, 60) schwenkbar um die Längsachse (A4), die in der Nähe ihres Längs-Schwenkrands (62, 64) angeordnet ist, befestigt ist, damit die Platte (58, 60) aus ihrer eingeklappten Position in einem ersten Schritt durch Schwenken nach oben und nach hinten um die Querachse (57) und in einem zweiten Schritt zur Seite und nach unten um die Längsachse (A4) in ihre Verwendungsposition kommt, und bei welcher die Konsole (16) im Wesentlichen in ihrem oberen Teil eine Öffnung (26) zum Durchlassen der Platte (58, 60), wenn sie um ihre Querachse (57) schwenkt, aufweist, sowie wenigstens eine schwenkbare Abdeckung (34, 44), die geeignet ist, die Öffnung (26) zu verschließen,
**dadurch gekennzeichnet, dass** die Konsole (16) ein Abdeckelement (44) aufweist, das bezogen auf die Konsole (16) um eine im Wesentlichen quer verlaufende Achse (A3) zwischen einer geschlossenen Position und einer geöffneten Position der Konsole (16) schwenkbar befestigt ist, und **dadurch**, dass das Abdeckelement (44) in der geöffneten Position ein Stützelement für die Platte (58, 60) in ihrer Verwendungsposition bildet.

2. Anordnung gemäß dem vorausgegangenen Anspruch, **dadurch gekennzeichnet, dass** die Platte (58, 60) auf einem Mittelbrett (68) um ihre Querachse (A4) schwenkbar ist und das Mittelbrett (68) um die Querachse (57) schwenkbar ist.

3. Anordnung gemäß dem vorausgegangenen Anspruch, **dadurch gekennzeichnet, dass** in eingeklappter Position das Mittelbrett (68) den oberen Teil (26h) der Öffnung (26) der Konsole (16) verschließt.

4. Anordnung gemäß einem der vorausgegangenen Ansprüche, **dadurch gekennzeichnet, dass** der Tisch (10) zwei Platten (58, 60) aufweist, die um die gleiche Querachse (57) schwenkbar sind und die zueinander gelenkig sind.
